(19) **Europäisches Patentamt**

**European Patent Office**

**Office européen des brevets**

(11) **EP 0 855 086 B1**

(12) **FASCICULE DE BREVET EUROPEEN**

(45) Date de publication et mention
de la délivrance du brevet:
**15.03.2000 Bulletin 2000/11**

(51) Int Cl.$^7$: **H01J 47/02**

(21) Numéro de dépôt: **96933509.0**

(86) Numéro de dépôt international:
**PCT/FR96/01576**

(22) Date de dépôt: **10.10.1996**

(87) Numéro de publication internationale:
**WO 97/14173 (17.04.1997 Gazette 1997/17)**

(54) **DETECTEUR DE POSITION, A HAUTE RESOLUTION, DE HAUTS FLUX DE PARTICULES IONISANTES**

LAGE EMPFINDLICHER HOCHANFLÖSUNGS DETEKTOR FÜR HOHE FLÜSSE IONISIERENDER TEILCHEN

HIGH-RESOLUTION POSITION DETECTOR FOR HIGH-FLUX IONISING PARTICLE STREAMS

(84) Etats contractants désignés:
**CH DE GB IT LI NL**

(30) Priorité: **11.10.1995 FR 9511928**

(43) Date de publication de la demande:
**29.07.1998 Bulletin 1998/31**

(73) Titulaires:
- **COMMISSARIAT A L'ENERGIE ATOMIQUE**
  **75015 Paris (FR)**
- **BIOSPACE INSTRUMENTS**
  **75013 Paris (FR)**

(72) Inventeurs:
- **CHARPAK, Georges**
  **F-75005 Paris (FR)**
- **GIOMATARIS, Ioannis**
  **F-78000 Versailles (FR)**
- **REBOURGEARD, Philippe**
  **F-75015 Paris (FR)**

- **ROBERT, Jean-Pierre**
  **F-91430 Igny (FR)**

(74) Mandataire: **Signore, Robert et al**
  **c/o BREVATOME**
  **3, rue du Docteur Lanceraux**
  **75008 Paris (FR)**

(56) Documents cités:
  **US-A- 5 308 987**

- **NUCLEAR INSTRUMENTS & METHODS IN PHYSICS RESEARCH, SECTION - A: ACCELERATORS, SPECTROMETERS, DETECTORS AND ASSOCIATED EQUIPMENT, vol. 274, no. 1-2, 1 Janvier 1989, AMSTERDAM NL, pages 275-290, XP000121570 G. CHARPAK ET AL.: "Gaseous detectors with parallel electrodes and anode mesh planes." cité dans la demande**

# Description

La présente invention concerne un détecteur de particules ionisantes.

Elle s'applique notamment en physique des particules ainsi qu'en médecine et en biologie, dans le domaine de l'imagerie des rayons β et dans le domaine de l'imagerie des rayons X.

## ÉTAT DE LA TECHNIQUE ANTÉRIEURE

On connaît déjà, par le document

(1) G. CHARPAK et al., "Gaseous detectors with parallel electrodes and anode mesh planes", Nuclear Instruments and Methods in Physics Research A274 (1989), p.275 à 290,

un détecteur de particules ionisantes comprenant une cathode constituée par une grille qui est faite de fils tissés et dont les mailles ont une taille de l'ordre de 600 μm.

De ce fait, la cathode et l'anode du détecteur doivent être espacées de plusieurs millimètres pour éviter d'avoir une trop grande fluctuation du gain dans l'espace d'amplification ("*amplification gap*") compris entre l'anode et la cathode.

La distance importante entre ces dernières limite la résolution spatiale et le taux de comptage de ce détecteur.

En effet, avec une telle distance entre la cathode et l'anode de ce détecteur connu, le temps de collection, par la cathode, des ions engendrés par un processus d'avalanche dans l'espace d'amplification est relativement élevé.

De plus, ce temps de collection relativement élevé conduit à récupérer, à l'anode du détecteur, des signaux électriques dont le temps de montée est relativement long, d'où des problèmes d'empilement dans les moyens électroniques de traitement de ces signaux.

## EXPOSÉ DE L'INVENTION

La présente invention concerne un détecteur de particules ionisantes qui est susceptible d'avoir une résolution spatiale nettement plus élevée que le détecteur connu, mentionné plus haut, et de détecter des flux de particules ionisantes nettement plus élevés que ce détecteur connu.

De façon précise, la présente invention a pour objet un détecteur de particules ionisantes, ce détecteur comprenant :

- une enceinte à gaz,
- des première, deuxième et troisième électrodes planes, placées dans cet ordre dans l'enceinte et maintenues parallèles les unes aux autres, les première et deuxième électrodes délimitant un espace de conversion (*"conversion gap")* dans lequel les particules engendrent des électrons, les deuxième et troisième électrodes délimitant un espace d'amplification ("*amplification gap")* dans lequel ces électrons sont multipliés par un processus d'avalanche, la deuxième électrode étant percée de trous et constituant une cathode, la troisième électrode constituant une anode et comprenant un ensemble d'anodes élémentaires électriquement isolées les unes des autres, et

- des moyens de polarisation aptes à porter la première électrode à un premier potentiel, la cathode à un deuxième potentiel supérieur au premier potentiel et les anodes élémentaires à un troisième potentiel supérieur au deuxième potentiel, ces moyens de polarisation permettant ainsi de créer des champs électriques respectivement dans les espaces de conversion et d'amplification,

la distance D entre la cathode et l'anode étant inférieure à 500 μm et le rapport R de l'intensité du champ électrique créé dans l'espace d'amplification à l'intensité du champ électrique créé dans l'espace de conversion étant supérieur à 10.

Comme on le verra mieux par la suite, l'utilisation d'une faible distance, inférieure à 500 μm, entre la cathode et l'anode du détecteur objet de l'invention permet d'avoir dans celui-ci des anodes élémentaires dont la taille est sensiblement égale à cette distance ou inférieure à celle-ci, ce qui permet d'atteindre une très haute résolution spatiale.

De plus, le rapport entre les intensités des champs électriques dont il a été question précédemment est nettement plus élevé dans la présente invention qu'il ne l'est dans le détecteur connu, mentionné plus haut.

Comme on le verra mieux par la suite, ceci permet la détection de flux de particules nettement plus élevés que ceux qui sont détectés avec ce détecteur connu.

De préférence, la distance D entre la cathode et l'anode du détecteur objet de l'invention ne dépasse pas 200 μm.

En effet, la résolution spatiale que l'on peut atteindre avec ce détecteur est d'autant plus élevée que cette distance D est faible.

De préférence également, le rapport R entre les intensités des champs électriques est au moins égal à 50.

Comme on le verra mieux par la suite, ceci permet de détecter des flux de particules ionisantes très élevés.

Selon un mode de réalisation préféré du détecteur objet de l'invention, l'épaisseur E de la cathode est inférieure à D/10.

Ceci conduit à une bonne uniformité du gain dans l'espace d'amplification du détecteur et facilite le passage des électrons de l'espace de conversion à cet espace d'amplification.

De préférence, la taille T des trous de la cathode et le pas P de ces trous sont dans l'intervalle allant de D/10 à D/7, cette taille T étant supérieure à l'épaisseur E et inférieure au pas P.

Ceci conduit à un champ électrique ayant une bonne uniformité dans l'espace d'amplification et contribue donc également à une bonne uniformité du gain dans cet espace d'amplification.

Selon un premier mode de réalisation particulier du détecteur objet de l'invention, les anodes élémentaires sont des bandes électriquement conductrices parallèles les unes aux autres.

Selon un deuxième mode de réalisation particulier, les anodes élémentaires sont des éléments électriquement conducteurs formant un réseau bidimensionnel en damier.

Selon un troisième mode de réalisation particulier, les anodes élémentaires sont réparties en un premier ensemble de bandes électriquement conductrices parallèles les unes aux autres et en un deuxième ensemble de bandes électriquement conductrices parallèles les unes aux autres, perpendiculaires aux bandes du premier ensemble et électriquement isolées de celles-ci.

Pour maintenir l'anode et la cathode parallèle l'une à l'autre, on peut utiliser des espaceurs électriquement isolants.

La pression du gaz dans l'enceinte du détecteur objet de l'invention peut être supérieure à $10^3$ Pa pour engendrer une quantité significative d'électrons dans l'espace de conversion de ce détecteur, grâce à l'ionisation du gaz par les particules.

En variante, la pression du gaz dans l'enceinte est au contraire très inférieure à $10^3$ Pa et l'on munit en outre le détecteur d'une couche d'un matériau apte à engendrer les électrons dans l'espace de conversion par interaction avec les particules ionisantes, cette couche étant formée sur la première électrode, en regard de la cathode du détecteur.

**BRÈVE DESCRIPTION DES DESSINS**

La présente invention sera mieux comprise à la lecture de la description d'exemples de réalisation donnés ci-après, à titre purement indicatif et nullement limitatif, en faisant référence aux dessins annexés sur lesquels :

- la figure 1 est une vue en coupe schématique d'un mode de réalisation particulier du détecteur objet de l'invention,
- la figure 2 est une vue en coupe schématique et partielle du détecteur de la figure 1, montrant des espaceurs utilisés dans ce détecteur,
- la figure 3 est une vue en perspective schématique d'une anode en damier utilisable dans la présente invention,
- la figure 4 est une vue de dessus schématique d'une anode utilisable dans la présente invention et permettant une lecture bidimensionnelle des avalanches engendrées dans l'espace d'amplification,
- la figure 5 est une vue schématique d'un autre détecteur conforme à l'invention, comprenant une couche à émission secondaire d'électrons, et
- la figure 6 représente les variations de la transmission de la cathode d'un détecteur conforme à l'invention en fonction du rapport de l'intensité du champ électrique créé dans l'espace d'amplification à l'intensité du champ électrique créé dans l'espace de conversion de ce détecteur.

**EXPOSÉ DÉTAILLÉ DE MODES DE RÉALISATION PARTICULIERS**

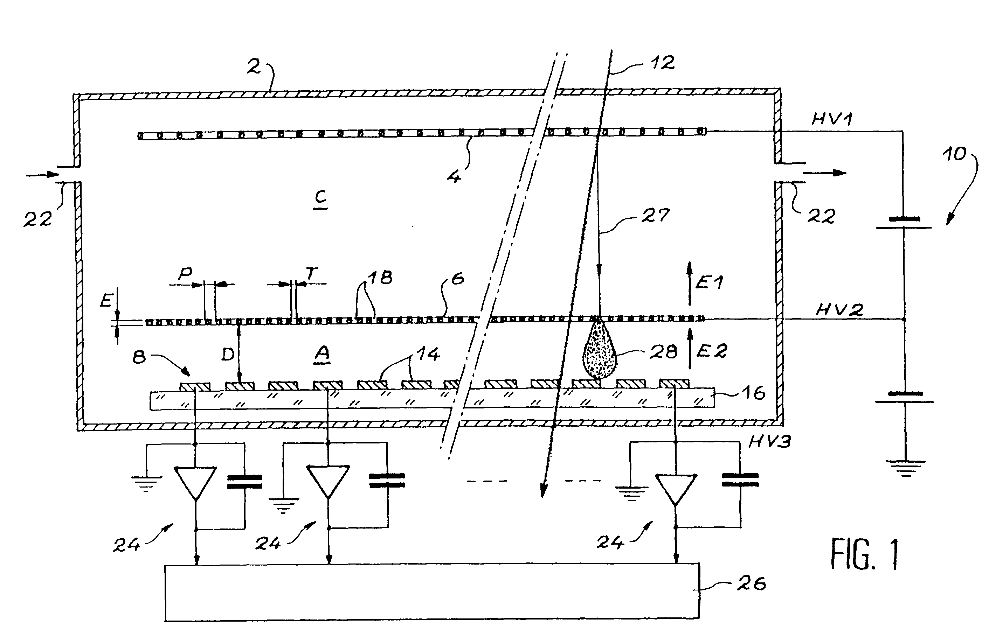

Le détecteur conforme à l'invention, qui est schématiquement représenté sur la figure 1, comprend :

- une enceinte à gaz 2,
- trois électrodes planes 4, 6 et 8 contenues dans l'enceinte 2, qui sont parallèles les unes aux autres, et
- des moyens 10 de polarisation de ces électrodes.

Lorsque les particules ionisantes à détecter, telles que la particule dont la trajectoire est matérialisée par la flèche 12, traversent l'enceinte 2, elles rencontrent successivement l'électrode 4, l'électrode 6 puis l'électrode 8.

L'électrode 6 constitue la cathode du détecteur tandis que l'électrode 8 constitue l'anode de ce détecteur.

L'électrode 4, dont la structure importe peu (ce peut être par exemple une grille), et la cathode 6 du détecteur de la figure 1 délimitent un espace C appelé "espace de conversion" dont la fonction sera expliquée par la suite.

La cathode 6 et l'anode 8 du détecteur délimitent, quant à elles, un espace A appelé "espace d'amplification" dont la fonction sera également expliquée par la suite.

L'anode 8 du détecteur comprend un ensemble d'anodes élémentaires 14 formées sur un support électriquement isolant 16 et espacées les unes des autres.

Dans l'exemple représenté sur la figure 1, ces anodes élémentaires sont des bandes électriquement conductrices parallèles les unes aux autres (vues en coupe transversale sur la figure 1).

La cathode 6 du détecteur de la figure 1 est une plaque mince électriquement conductrice, de faible épaisseur et percée de trous 18 de faible taille, cette cathode 6 formant ainsi une grille qui, compte tenu de la faible taille de ses trous, peut être appelée "microgrille".

Les moyens de polarisation 10 sont aptes à porter l'électrode 4 à un potentiel HV1, la cathode 6 à un potentiel HV2 supérieur à HV1 et toutes les bandes conductrices 14 à un même potentiel HV3 supérieur à HV2.

Dans l'exemple représenté sur la figure 1, ces bandes conductrices 14 sont mises à la masse, les potentiels HV1 et HV2 étant tous deux négatifs.

Les moyens de polarisation 10 permettent ainsi de créer des champs électriques E1 et E2 respectivement dans l'espace de conversion C et dans l'espace d'amplification A.

Conformément à la présente invention, la distance D entre la cathode 6 et le plan des bandes conductrices 14 est faible.

Dans l'exemple représenté, la distance D vaut 100 μm.

La distance entre l'électrode 4 et la cathode 6 est, quant à elle, beaucoup plus grande et vaut 3 mm dans l'exemple représenté.

De plus, le rapport R de l'intensité du champ électrique E2 créé dans l'espace d'amplification A à l'intensité du champ électrique E1 créé dans l'espace de conversion C, est très grand, au moins égal à 50.

Dans l'exemple représenté sur la figure 1, les moyens de polarisation 10 engendrent un champ de 100 kV/cm dans l'espace d'amplification et un champ de 1 kV/cm dans l'espace de conversion de sorte que ce rapport R est égal à 100.

Dans le détecteur de la figure 1, les bandes conductrices 14 sont des micro-pistes de cuivre de 150 μm de large et de 5 μm d'épaisseur, qui sont protégées par une mince couche d'or et qui sont obtenues par des dépôts appropriés sur le substrat isolant 16, ces micro-pistes étant espacées les unes des autres de 200 μm.

En notant respectivement E, T et P l'épaisseur de la micro-grille 6, la taille des trous 18 de cette micro-grille et le pas de ces trous, ces paramètres E, T et P vérifient les inégalités suivantes avec la distance D entre l'anode et la cathode du détecteur de la figure 1 :

$$E < D/10 < T \leq P < D/7.$$

Dans l'exemple représenté sur la figure 1, la micro-grille 6 est électroformée et son épaisseur E vaut 3μm tandis que la taille de ses trous et le pas de ceux-ci valent respectivement 8 μm et 10 μm.

Compte tenu de la faible distance entre l'anode et la cathode du détecteur, les conditions imposées à ces paramètres permettent d'obtenir, comme on le verra mieux par la suite, un gain sensiblement constant dans l'espace d'amplification A ainsi qu'un champ E2 sensiblement uniforme dans cet espace A.

Le gain est égal au nombre d'électrons secondaires produit dans une avalanche (c'est-à-dire pour un électron primaire).

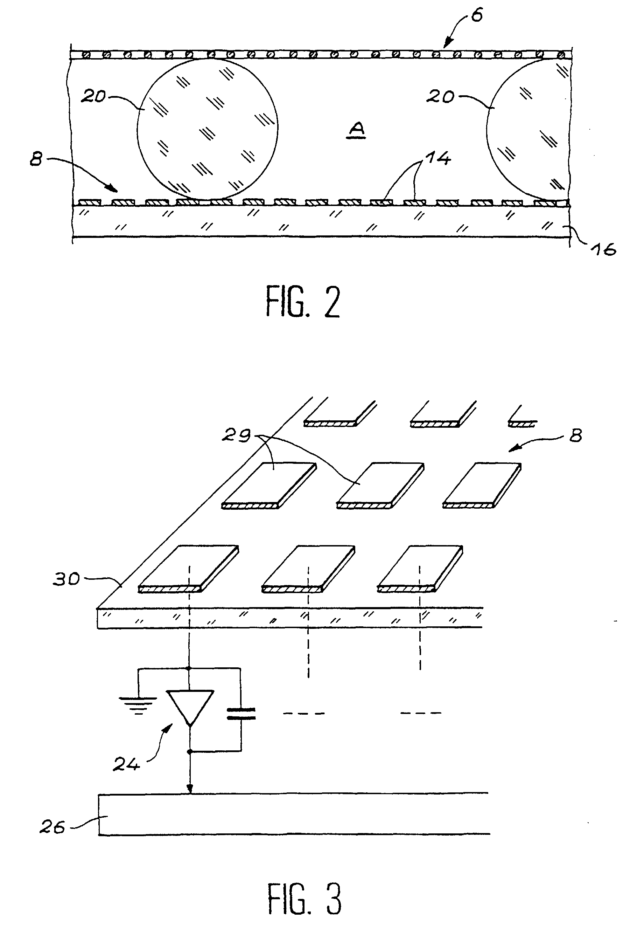

Pour empêcher les forces électrostatiques de rapprocher la cathode 6 et l'anode 8 l'une de l'autre et donc pour maintenir cette cathode et cette anode parallèles l'une à l'autre, on utilise des espaceurs électriquement isolants 20 (figure 2).

Dans l'exemple représenté, ces espaceurs 20 sont de petits fils de quartz de 100 μm de diamètre, espacés de 1 cm les uns des autres.

L'enceinte 2 du détecteur de la figure 1 est munie de moyens 22 permettant d'y faire circuler un gaz approprié, par exemple un mélange d'argon et de méthane (avec 90% d'argon et 10% de méthane).

Comme on le verra mieux par la suite, ce gaz permet l'amplification d'électrons par un processus d'avalanche.

La pression du gaz, qui remplit l'espace de conversion et l'espace d'amplification, est élevée et vaut par exemple $10^5$ Pa.

Dans un exemple non représenté, le gaz ne circule pas à travers l'enceinte 2 mais cette enceinte 2 est initialement remplie du gaz à la pression souhaitée.

Chacune des bandes conductrices 14 est reliée à un amplificateur rapide 24 permettant d'amplifier les signaux électriques recueillis par cette bande.

De plus, le détecteur de la figure 1 est muni de moyens 26 de traitement des signaux fournis par ces amplificateurs rapides 24.

On explique ci-après le fonctionnement du détecteur de la figure 1.

Lorsqu'une particule ionisante traverse l'enceinte 2, elle ionise le gaz qui se trouve dans l'espace de conversion C et y crée environ une dizaine d'électrons primaires.

Sous l'effet du champ électrique existant dans cet espace, les électrons ainsi créés par ionisation dérivent vers la cathode 6.

On a matérialisé par une flèche 27 la trajectoire de l'un de ces électrons sur la figure 1.

Ceux-ci traversent ensuite les ouvertures dont la cathode est pourvue et se dirigent vers l'anode 8.

Cette traversée de la cathode est facilitée par le rapport élevé existant entre le champ créé dans l'espace de conversion et le champ créé dans l'espace d'amplification.

Après avoir traversé la cathode 6, ces électrons sont amplifiés grâce au champ élevé qui règne dans l'espace d'amplification par le processus bien connu d'avalanche.

Sur la figure 1, on a donné la référence 28 à l'avalanche associée à l'électron dont la trajectoire porte la référence 27.

On reviendra par la suite plus en détail sur ce fonctionnement du détecteur de la figure 1 mais on précise dès maintenant que ces gains de l'ordre de $10^4$ sont facilement obtenus, dans l'espace d'amplification, sans provoquer d'étincelles entre l'anode et la cathode du détecteur.

A titre d'exemple, avec une source de rayons X de 5,9 KeV, issus de la désintégration de $^{55}$Fe, ce détecteur permet d'obtenir des impulsions dont la résolution en énergie est voisine de 25%, comme dans les chambres à fils classiques, et avec des gains de l'ordre de $10^4$, voire supérieurs à cette valeur.

On n'est pas limité pour le choix du matériau constitutif du substrat sur lequel sont disposées les bandes conductrices 14 ni pour le choix de l'épaisseur de ce substrat.

De nombreuses techniques, peu coûteuses, sont utilisables pour former ces bandes conductrices et connecter celles-ci aux amplificateurs rapides qui leur sont associés.

On est ainsi capable de fabriquer un détecteur conforme à l'invention, simple à mettre en oeuvre et de grande transparence vis-à-vis des particules ionisantes à détecter.

Ces avantages sont déterminants dans le domaine médical et dans ceux de la physique nucléaire et des hautes énergies.

La structure du détecteur de la figure 1 conduit à des performances que ne permettaient pas les détecteurs connus jusqu'à présent.

Ainsi, en physique des particules, en raison de la très faible distance entre l'anode et la cathode d'un détecteur du genre de celui de la figure 1, les ions positifs produits au cours du processus d'avalanche, dans l'espace d'amplification, sont collectés par la cathode du détecteur en un temps inférieur environ à 100 ns.

On est donc capable d'éviter l'apparition d'une charge d'espace introduite par ces ions et d'obtenir des taux de comptage supérieurs à environ $10^6$ coups/s/mm$^2$.

Il est à noter que, dans une chambre à fils classique, le temps de "balayage" des ions positifs peut atteindre quelques dizaines de microsecondes si bien que les taux de comptage sont limités à des valeurs au moins cent fois plus faibles que ce que l'on est capable d'obtenir avec un détecteur conforme à l'invention.

Etant donné que les bandes conductrices 14 sont au même potentiel, on peut laisser entre ces bandes un intervalle très restreint, aussi faible que 5 à 10% de leur largeur.

On évite ainsi le problème de dépôt de charges sur le substrat isolant 16 qui porte ces bandes 14.

Il est à noter que tout ceci est radicalement différent de ce qui existe dans un détecteur du type "enceinte à gaz à micro-bandes" ("*Micro-Strip Gas Chamber*") dans lequel l'amplification est obtenue grâce à un champ électrique engendré entre des bandes conductrices étroites et adjacentes, formées sur un substrat électriquement isolant.

Dans ce dernier cas, il faut en effet prévoir une distance assez importante entre les bandes pour pouvoir appliquer une tension élevée entre celles-ci.

Cela cause des problèmes considérables du fait des charges positives qui se déposent alors sur le substrat isolant.

Dans le cas présent, les bandes conductrices 14 sont au même potentiel de sorte que la distance entre deux bandes adjacentes peut être arbitrairement petite et seulement déterminée par la technologie employée pour réaliser ces bandes.

On précise également que la forme des anodes élémentaires dont il a été question plus haut (et qui sont constituées par les bandes conductrices 14 dans le cas de la figure 1) n'est absolument pas critique et l'on peut réaliser, conformément à l'invention, aussi bien un détecteur à bandes conductrices qu'un détecteur dans lequel les anodes élémentaires sont de minces éléments électriquement conducteurs 29 (figure 3) formant un réseau bidimensionnel en damier sur un substrat plan électriquement isolant 30.

Comme précédemment, ces éléments 29 sont respectivement reliés à des amplificateurs rapides 24 eux-mêmes reliés à des moyens électroniques de traitement 26.

D'autres structures sont envisageables pour l'anode 8 suivant l'application à laquelle on destine le détecteur.

D'autres détecteurs conformes à l'invention, permettant une "lecture" bidimensionnelle des avalanches, sont réalisables.

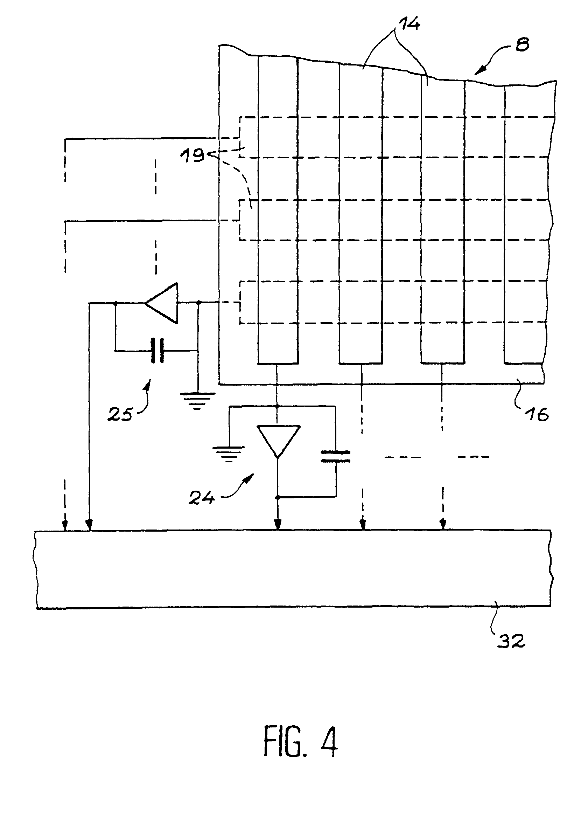

Un exemple de tels détecteurs est schématiquement illustré par la figure 4.

Dans le détecteur de la figure 4, l'anode 8 comprend non seulement l'ensemble des bandes conductrices parallèles 14 formées sur un face du substrat électriquement isolant 16 mais encore un autre ensemble de bandes conductrices parallèles 19 formées sur l'autre face de ce substrat 16 et perpendiculaires aux bandes 14.

Les bandes 14 sont encore en regard de la cathode du détecteur (non représentée sur la figure 4).

Les bandes conductrices 19 sont toutes au même potentiel (elles sont à la masse dans l'exemple représenté) et sont respectivement reliées à des amplificateurs rapides 25 qui, comme les amplificateurs rapides 24 associés aux bandes 14, sont reliés à des moyens 32 de traitement des signaux fournis par ces amplificateurs 24 et 25.

Une distance suffisante est prévue entre les bandes 14 afin que les impulsions électriques engendrées dans ces bandes 14 puissent être induites sur les autres bandes 19.

Lorsqu'on souhaite détecter des taux de comptage importants, on peut sans inconvénient recouvrir les bandes 14 d'un fin dépôt résistif par exemple en germanium.

Ce dépôt laisse passer les signaux induits et, les bandes étant toutes au même potentiel, la grande résistivité de ce dépôt n'induit pas de couplage entre ces bandes.

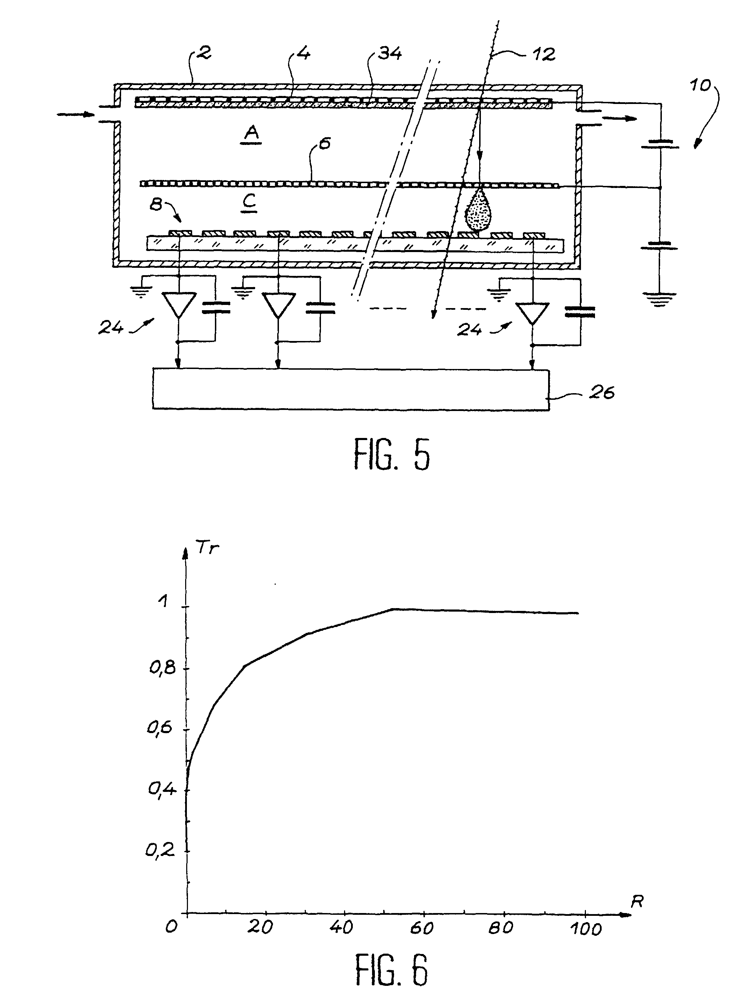

Un autre détecteur conforme à l'invention est schématiquement illustré par la figure 5.

Ce détecteur de la figure 5 diffère simplement de celui de la figure 1 par le fait que :

- l'électrode 4 est beaucoup plus proche de la cathode 6 dans le cas de la figure 5 (leur distance est de l'ordre de quelques centaines de micromètres),

- l'électrode 4 est recouverte, en regard de la cathode 6, d'une couche 34 d'un matériau apte à engendrer des électrons par interaction avec les particules ionisantes à détecter, et

- la pression dans l'enceinte 2 du détecteur de la figure 5 est maintenue à une valeur inférieure à celle qui existe dans le détecteur de la figure 1 : la pression est de l'ordre de quelques centaines de Pa dans le cas de la figure 5.

Il s'agit donc d'un détecteur à basse pression.

La présente invention est très favorable à la réalisation d'un tel détecteur.

Avec celui-ci, des résolutions temporelles de quelques dizaines de picosecondes sont accessibles.

L'invention a également des applications dans le domaine de la médecine et dans celui de la biologie.

Elle s'applique en particulier au domaine de l'imagerie des rayons β.

Dans ce domaine, on connaît divers détecteurs gazeux à fils ou à faces parallèles, destinés à localiser des rayons β.

Dans tous ces détecteurs connus, se pose le problème du parcours élevé des rayons β, dans le gaz, ce qui limite la résolution de ces détecteurs connus.

Avec un détecteur conforme à l'invention, comprenant un espace de conversion de faible épaisseur, de l'ordre de 200 μm, suivi d'un espace d'amplification d'une épaisseur de 100 μm, ce problème est résolu pour la plupart des applications.

On obtient alors une résolution spatiale égale à une fraction de l'épaisseur totale du détecteur soit typiquement une cinquantaine de micromètres.

L'invention s'applique également tout particulièrement au domaine de l'imagerie des rayons X.

A ce domaine s'applique également un détecteur connu par le document suivant :

(2) Demande de brevet français n° 9302817 du 11 mars 1993 (voir aussi demande de brevet européen n° 94 400 501.6 du 8 mars 1994)

Cependant, un détecteur conforme à l'invention présente l'avantage sur ce détecteur connu d'être plus facile à construire, du fait de l'absence de fils, de permettre des taux de comptage plus élevés et d'avoir une plus grande précision sur la localisation en raison de la faible distance que l'on peut avoir entre les bandes conductrices de l'anode de ce détecteur conforme à l'invention.

On revient maintenant sur le fonctionnement et les avantages d'un détecteur conforme à l'invention.

Il est à noter que la configuration très asymétrique des électrodes d'un tel détecteur conduit à un fonctionnement très différent des détecteurs connus et à des performances jamais atteintes par ces détecteurs.

En effet, dans ce détecteur conforme à l'invention, le processus de multiplication des électrons a lieu uniquement dans l'espace d'amplification, compris entre l'anode et la cathode, sous l'effet du fort champ électrique existant dans cet espace, et la taille de l'avalanche créée est de l'ordre de grandeur de la distance entre l'anode et la cathode (100 μm dans l'exemple de la figure 1).

On peut donc se permettre d'utiliser des bandes conductrices ou des éléments en damier, dont la largeur est de l'ordre de 100 μm ou inférieure à cette valeur, et atteindre une résolution spatiale de quelques dizaines de micromètres.

De plus, l'utilisation de grilles dans les détecteurs connus conduit à une perte d'efficacité de ceux-ci.

Dans un détecteur conforme à l'invention, le rapport R entre les intensités de ces champs est très élevé et peut être rendu égal à 100 ou plus de 100.

Ceci permet d'obtenir une efficacité de collection des électrons proche de 100% comme le montre la la figure 6 où l'on voit la courbe des variations de la transmission Tr de la cathode en forme de grille utilisée dans un détecteur conforme à l'invention, en fonction de ce rapport R.

On voit que pour des valeurs de ce rapport inférieures à 10 la transparence de cette grille est inférieure à 75% mais qu'elle devient totale (100%) dès qu'on approche d'un rapport de l'ordre de 50.

Il est à noter que cet effet s'accentue pour des grilles ayant des mailles plus fines ou de modestes transparences optiques car le rapport R nécessaire pour atteindre une pleine efficacité doit prendre des valeurs encore supérieures que l'on peut facilement obtenir avec un détecteur conforme à l'invention.

De plus, les ions positifs créés pendant le processus de multiplication des électrons subissent, contrairement à ces électrons, un rapport de champs extrêmement faible qui est exactement l'inverse du rapport de champs "vu" par les électrons et qui empêche le passage de ces ions à travers la grille.

La très large majorité de ces ions va donc être collectée sur cette grille dans un intervalle de temps très court, de l'ordre de 100 ns.

Cette rapide évacuation des ions permet d'atteindre des taux de comptage très élevés.

De plus, dans un détecteur du genre de celui de la figure 1, les signaux récupérés par les bandes conductrices 14 sont essentiellement dus aux mouvements des ions dans l'espace d'amplification : ces signaux sont induits lors de la collection de ces ions par la cathode 6 en forme de grille.

En employant des bandes conductrices de 150 μm de large, environ deux bandes en moyenne sont touchées par un signal d'induction.

Dans les détecteurs connus où l'espace d'amplification est de plusieurs millimètres, ce signal d'induction toucherait un nombre très élevé de bandes conductrices (environ 40) ce qui nuirait à la détection de hauts flux de particules ionisantes ainsi qu'à l'efficacité de ces détecteurs puisque le signal induit se trouverait partagé entre un grand nombre de bandes conductrices.

En pratique, on serait obligé d'employer des bandes conductrices de plusieurs millimètres de large qui dégraderaient en conséquence le pouvoir de résolution spatiale de ces détecteurs.

De plus, avec ceux-ci, pour un espace de l'ordre de 1 mm entre l'anode et la cathode et pour le même facteur de multiplication, le signal dû aux ions positifs atteint sa valeur maximale dans un intervalle de temps égal au temps de dérive des ions ce qui représente plusieurs dizaines de microsecondes.

Pour réduire le temps de montée des signaux, on est alors contraint d'utiliser des moyens électroniques rapides qui affaiblissent l'amplitude du signal.

Rechercher une compensation de cet effet par une augmentation du gain amène ces détecteurs au voisinage de leur régime d'étincelles.

Au contraire, la présente invention permet d'obtenir des temps de montée de l'ordre de 100 ns avec un excellent rapport signal/bruit et en opérant dans un régime de multiplication beaucoup plus bas et donc plus stable.

**Revendications**

1. Détecteur de particules ionisantes, ce détecteur comprenant :

   - une enceinte à gaz (2),
   - des première (4), deuxième (6) et troisième (8) électrodes planes, placées dans cet ordre dans l'enceinte et maintenues parallèles les unes aux autres, les première et deuxième électrodes délimitant un espace de conversion (C) dans lequel les particules engendrent des électrons, les deuxième et troisième électrodes délimitant un espace d'amplification (A) dans lequel ces électrons sont multipliés par un processus d'avalanche, la deuxième électrode étant percée de trous (18) et constituant une cathode (6), la troisième électrode constituant une anode (8) et comprenant un ensemble d'anodes élémentaires (14; 29; 14, 19) électriquement isolées les unes des autres, et
   - des moyens de polarisation (10) aptes à porter la première électrode (4) à un premier potentiel, la cathode (6) à un deuxième potentiel supérieur au premier potentiel et les anodes élémentaires (14; 29; 14, 19) à un troisième potentiel supérieur au deuxième potentiel, ces moyens de polarisation permettant ainsi de créer des champs électriques (E1, E2) respectivement dans les espaces de conversion (C) et d'amplification (A),

   la distance D entre la cathode (6) et l'anode (8) étant inférieure à 500 $\mu$m et le rapport R de l'intensité du champ électrique (E2) créé dans l'espace d'amplification (A) à l'intensité du champ électrique (E1) créé dans l'espace de conversion (C) étant supérieur à 10.

2. Détecteur selon la revendication 1, caractérisé en ce que la distance D ne dépasse pas 200 $\mu$m.

3. Détecteur selon l'une quelconque des revendications 1 et 2, caractérisé en ce que le rapport R est au moins égal à 50.

4. Détecteur selon l'une quelconque des revendications 1 à 3, caractérisé en ce que l'épaisseur E de la cathode (6) est inférieure à D/10.

5. Détecteur selon l'une quelconque des revendications 1 à 4, caractérisé en ce que la taille T des trous (18) de la cathode (6) et le pas P de ces trous sont dans l'intervalle allant de D/10 à D/7, cette taille T étant supérieure à l'épaisseur E et inférieure au pas P.

6. Détecteur selon l'une quelconque des revendications 1 à 5, caractérisé en ce que les anodes élémentaires sont des bandes électriquement conductrices (14) parallèles les unes aux autres.

7. Détecteur selon l'une quelconque des revendications 1 à 5, caractérisé en ce que les anodes élémentaires sont des éléments électriquement conducteurs (29) formant un réseau bidimensionnel en damier.

8. Détecteur selon l'une quelconque des revendications 1 à 5, caractérisé en ce que les anodes élémentaires sont réparties en un premier ensemble de bandes électriquement conductrices (14) parallèles les unes aux autres et en un deuxième ensemble de bandes électriquement conductrices (19) parallèles les unes aux autres, perpendiculaires aux bandes (14) du premier ensemble et électriquement isolées de celles-ci.

9. Détecteur selon l'une quelconque des revendications 1 à 8, caractérisé en ce qu'il comprend en outre des espaceurs électriquement isolants (20) destinés à maintenir l'anode (8) et la cathode (6) parallèles l'une à l'autre.

10. Détecteur selon l'une quelconque des revendications 1 à 9, caractérisé en ce que la pression du gaz dans l'enceinte (2) est supérieure à $10^3$ Pa, les électrons engendrés dans l'espace de conversion (C) résultant de l'ionisation du gaz par les particules.

11. Détecteur selon l'une quelconque des revendications 1 à 9, caractérisé en ce que la pression du gaz dans l'enceinte (2) est inférieure à $10^3$ Pa et en ce que ce détecteur comprend en outre une couche (34) d'un matériau apte à engendrer les électrons dans l'espace de conversion (C) par interaction avec les particules ionisantes, cette couche étant formée sur la première électrode (4), en regard de la cathode (6).

12. Détecteur selon l'une quelconque des revendications 1 à 11, caractérisé en ce que la taille des anodes élémentaires est sensiblement égale à la distance (D) entre la cathode et l'anode ou inférieure à celle-ci.

**Patentansprüche**

1. Detektor ionisierender Teilchen, umfassend:

   - einen Gasbehälter (2),
   - eine erste (4), zweite (6) und dritte (8) ebene Elektrode, in dem Behälter in dieser Reihenfolge angeordnet, parallel zueinander, wobei die erste und die zweite Elektrode einen Konversionsraum (C) abgrenzen, in dem die Teilchen Elektronen erzeugen, und die zweite und die dritte Elektrode einen Verstärkungsraum (A) abgrenzen, in dem diese Elektroden durch einen Lawinenprozess vervielfältigt werden, wobei die zweite Elektrode von Löchern (18) durchquert wird und eine Kathode (6) bildet und die dritte Elektrode einen Anode (8) bildet und ein System aus elektrisch voneinander isolierten Elementaranoden (14; 29; 14, 19) umfasst, und
   - Vorspannungseinrichtungen (10), fähig die erste Elektrode (4) auf ein erstes Potential zu bringen und die Kathode (6) auf ein zweites Potential, höher als das erste Potential, und die Elementaranoden (14; 29; 14, 19) auf ein drittes Potential, höher als das zweite Potential, wobei diese Vorspannungseinrichtungen so ermöglichen, jeweils in dem Konversionsraum (C) und dem Verstärkungsraum (A) elektrische Felder (E1, E2) zu erzeugen,

   wobei der Abstand D zwischen der Kathode (6) und der Anode (8) kleiner als 500 um ist, und das Verhältnis R der Stärke des in dem Verstärkungsraum (A) erzeugten elektrischen Feldes (E2) zur Stärke des in dem Konversionsraum (C) erzeugten elektrischen Feldes (E1) größer ist als 10.

2. Detektor nach Anspruch 1, dadurch gekennzeichnet, dass der Abstand D 200 µm nicht überschreitet.

3. Detektor nach einem der Ansprüche 1 und 2, dadurch gekennzeichnet, dass das Verhältnis R wenigstens gleich 50 ist.

4. Detektor nach einem der Ansprüche 1 bis 3, dadurch gekennzeichnet, dass die Dicke E der Kathode (6) kleiner als D/10 ist.

5. Detektor nach einem der Ansprüche 1 bis 4, dadurch gekennzeichnet, dass die Größe T der Löcher (18) der Kathode (6) und die Teilung P dieser Löcher innerhalb des Intervalls enthalten sind, das von D/10 bis D/7 geht, wobei diese Größe T größer als die Dicke E und kleiner als die Teilung P ist.

6. Detektor nach einem der Ansprüche 1 bis 5, dadurch gekennzeichnet, dass die Elementaranoden elektrisch leitende Streifen (14) sind, die parallel zueinander sind.

7. Detektor nach einem der Ansprüche 1 bis 5, dadurch gekennzeichnet, dass die Elementaranoden elektrisch leitende Elemente (29) sind, die ein zweidimensionales schachbrettartiges Gitter bilden.

8. Detektor nach einem der Ansprüche 1 bis 5, dadurch gekennzeichnet, dass die Elementaranoden zu einer ersten Gruppe paralleler, elektrisch leitender Streifen (14) angeordnet sind und zu einer zweiten Gruppe paralleler, elektrisch leitender Streifen (19), senkrecht zu den elektrisch leitenden Streifen (14) der erste Gruppe und von diesen elektrisch isoliert.

9. Detektor nach einem der Ansprüche 1 bis 8, dadurch gekennzeichnet, dass er außerdem elektrisch isolierende Abstandshalter (20) umfasst, dazu bestimmt, die Anode (8) und die Kathode (6) parallel zueinander zu halten.

10. Detektor nach einem der Ansprüche 1 bis 9, dadurch gekennzeichnet, dass der Druck des Gases in dem Behälter (2) höher als $10^3$ Pa ist, wobei die in dem Konversionsraum (C) erzeugten Elektronen aus der Ionisierung des Gases durch die Teilchen resultieren.

11. Detektor nach einem der Ansprüche 1 bis 9, dadurch gekennzeichnet, dass der Druck des Gases in dem Behälter (2) kleiner als $10^3$ Pa ist und dass dieser Detektor außerdem eine Schicht (34) aus einem Material umfasst, die fähig ist, durch Wechselwirkung mit den ionisierenden Teilchen die Elektronen in dem Konversionsraum (C) zu erzeugen, wobei diese Schicht auf der ersten Elektrode (4) ausgebildet ist, der Kathode (6) gegenüber.

12. Detektor nach einem der Ansprüche 1 bis 11, dadurch gekennzeichnet, dass die Größe der Elementarelektroden im wesentlichen gleich dem Abstand (D) zwischen der Kathode und der Anode oder kleiner als dieser ist.

## Claims

1. Ionizing particle detector, said detector comprising:

   - a gas chamber (2),
   - first (4), second (6) and third (8) plane electrodes placed in this order in the chamber and kept parallel with each other, the first and second electrodes delimiting a conversion gap (C) in which particles generate electrons, the second and third electrodes delimiting an amplification gap (A) in which these electrons are multiplied by an avalanche process, the second electrode being perforated by holes (18) and forming a cathode (6), the third electrode forming an anode (8) and comprising a set of elementary anodes (14; 29; 14; 19) electrically insulated from each other, and
   - polarization means (10) capable of increasing the first electrode (4) to a first potential, the cathode (6) to a second potential higher than the first potential, and elementary anodes (14; 29; 14; 19) to a third potential higher than the second potential, these polarization means thus being capable of creating electric fields (E1, E2) in the conversion (C) and amplification (A) gaps respectively,

   the distance D between the cathode (6) and the anode (8) being less than 500 μm and the ratio R of the intensity of the electric field (E2) created in the amplification gap (A) to the intensity of the electric field (E1) created in the conversion gap (C) exceeds 10.

2. Detector according to claim 1, characterized in that the distance D does not exceed 200 μm.

3. Detector according to either of claims 1 and 2, characterized in that the ratio R is at least equal to 50.

4. Detector according to any one of claims 1 to 3, characterized in that the thickness E of the cathode (6) is less than D/10.

5. Detector according to any one of claims 1 to 4, characterized in that the size T of the holes (18) in the cathode (6) and the pitch P of these holes are within the interval varying from D/10 to D/7, this size T being greater than the thickness E and less than the pitch P.

6. Detector according to any one of claims 1 to 5, characterized in that the elementary anodes are electrically conducting strips (14) parallel to each other.

7. Detector according to any one of claims 1 to 5, characterized in that the elementary anodes are electrically conducting elements (29) forming a two-dimensional checker board network.

8. Detector according to any one of claims 1 to 5, characterized in that the elementary anodes are distributed in a first set of electrically conducting strips (14) parallel to each other, and a second set of electrically conducting strips (19) parallel to each other and perpendicular to the strips (14) in the first set, and electrically insulated from them.

9. Detector according to any one of claims 1 to 8, characterized in that it also comprises electrically insulating spacers (20) designed to keep the anode (8) and cathode (6) parallel to each other.

10. Detector according to any one of claims 1 to 9, characterized in that the gas pressure in the chamber (2) exceeds $10^3$ Pa, the electrons generated in the conversion gap (C) resulting from gas being ionized by the particles.

11. Detector according to any one of claims 1 to 9, characterized in that the gas pressure in the chamber (2) is less than $10^3$ Pa and that this detector also comprises a layer (34) of a material capable of generating electrons in the conversion gap (C) by interaction with ionizing particles, this layer being formed on the first electrode (4) facing the cathode (6).

12. Detector according to any one of claims 1 to 11, characterized in that the size of the elementary anodes is approximately equal to the distance (D) between the cathode and the anode, or less than this distance.

FIG. 1

EP 0 855 086 B1

FIG. 2

FIG. 3

FIG. 4

FIG. 5

FIG. 6